# EUROPEAN PATENT APPLICATION

(11) **EP 1 944 644 A2**
(43) Date of publication of application: **16.07.2008**
(21) Application number: 07120504.1
(22) Date of filing: 12.11.2007
(51) Int. Cl.: G02B 26/10, G02B 27/00, G02B 17/00

(54) **Scanner module and image scanning apparatus employing the same**

(30) Priority: 15.01.2007 KR 20070004352
(71) Applicant: SAMSUNG ELECTRONICS CO., LTD., Suwon-si, Gyeonggi-do 442-742 (KR)
(72) Inventor: Kim, Hyun-surk, Gyeonggi-do, Suwon-si (KR); Kim, Kyung-rok, Bundang-gu, Gyeonggi-do, Suwon-si (KR)
(74) Representative: Waddington, Richard

(57) **Abstract**

A scanner module (50) includes an illumination optical unit (10) which illuminates light to an object, a plurality of reflecting mirrors (20) which reflect a light beam from the object and change a light path, a sensor unit (35) which reads information about the object from the incident light beam, a focusing lens unit (31) which is disposed between the plurality of reflecting mirrors (20) and the sensor unit (35) and focuses the light beam reflected from the plurality of reflecting mirrors (20) onto the sensor unit (35), and a ghost image preventing unit (40) which is formed on at least one of the plurality of reflecting mirrors (20) and controls a ghost image from being directed to the sensor unit (35).

## Description

### BACKGROUND OF THE INVENTION

### Field of the Invention

The present invention relates to a scanner module and an image scanning apparatus employing the same which read and obtain information from an object, and more particularly, to a scanner module and apparatus have a configuration to optically control a ghost image.

### Description of the Related Art

Generally, a scanner module has a configuration, which illuminates an object, for example, manuscript, on a cover glass and focuses a beam reflected from the object on a photographic device through a plurality of reflecting mirrors and an image-forming optical unit.

In this case, when a real image is placed to correspond to a predetermined position of the manuscript, a ghost image is placed on the other position of the manuscript besides the real image to be projected on the photographic device through a path unlike an advancing path of the real image. The ghost image appears as if shifted images are overlapped, so that deterioration of the obtained information can occur.

Meanwhile, a conventional method has been suggested so as to control the ghost image.

According to the conventional method, the ghost image is controlled by an optical method, optical elements are designed by considering the prevention of the ghost image. Meanwhile, it is difficult to eliminate all light paths corresponding to a structural factor of the ghost image. For example, in a structure that the light path is changed by applying two or more reflections to one reflecting mirror, it is requested to extend a width of the reflecting mirror, and the ghost image may appear while the normal real image is reflected between mirror regions.

### SUMMARY OF THE INVENTION

The invention provides a scanner module and an image scanning apparatus employing the same, which can optically control a ghost image in a compact configuration that employs one reflecting mirror for twice or more reflections.

Additional aspects of the present general inventive concept will be set forth in part in the description which follows and, in part, will be obvious from the description, or may be learned by practice of the present general inventive concept.

According to the present invention there is provided an apparatus and method as set forth in the appended claims. Other features of the invention will be apparent from the dependent claims, and the description which follows.

According to an aspect of the present invention there is provided a scanner module comprising an illumination optical unit which illuminates light to an object, a plurality of reflecting mirrors which reflect a light beam from the object and change a light path, a sensor unit which reads information about the object from the incident light beam, a focusing lens unit which is disposed between the plurality of reflecting mirrors and the sensor unit to focus the light beam reflected from the plurality of reflecting mirrors onto the sensor unit, and a ghost image preventing unit which is formed on at least one of the plurality of reflecting mirrors to control a ghost image from being directed to the sensor unit.

The plurality of reflecting mirrors may include at least one multiple reflecting mirror disposed to at least twice reflect a real image incident to different reflecting positions.

The ghost image preventing unit may be formed between the real image reflecting positions of the multiple reflecting mirror.

The ghost image preventing unit may include a transparent part formed on the multiple reflecting mirror to transmit the incident ghost image.

The ghost image preventing unit may include an absorption part formed on the multiple reflecting mirrors to absorb the incident ghost image.

According to another aspect of the present invention there is provided an image scanning apparatus comprising: a scanner module having an illumination optical unit which illuminates light to an object, a plurality of reflecting mirrors which reflect a light beam from the object and change a light path, a sensor unit which reads information about the object from the incident light beam, a focusing lens unit which is disposed between the plurality of reflecting mirrors and the sensor unit to focus the light beam reflected from the plurality of reflecting mirrors onto the sensor unit, and a ghost image preventing unit which is formed on at least one of the plurality of reflecting mirrors to control a ghost image from being directed to the sensor unit, and an image processing unit which processes a real image obtained from the scanner module.

The image processing unit may include a file forming unit to form a real image file based on the obtained real image, and an image forming unit to form an image based on the obtained real image to a printing medium.

According to another aspect of the present invention there is provided scanner module usable with an image scanning apparatus, including a mirror unit disposed on an optical path to receive a light beam, and including a plurality of reflecting mirrors each disposed to reflect the light beam along a second optical path, and a ghost image preventing unit formed on at least one of the plurality of reflecting mirrors to control a ghost image from being directed to the sensor unit and to obtain a real image from the light beam.

The one of the plurality of reflecting mirrors may include first and second reflecting regions disposed on the second optical path to correspond to adjacent ones of the plurality of reflecting mirrors.

The first and second reflecting regions of the one of the plurality of reflecting mirrors may be formed in a single monolithic body.

The first and second reflecting regions of the one of the plurality of reflecting mirrors may be formed on a same plane.

The first and second reflecting regions of the one of the plurality of reflecting mirrors may be spaced-apart from each other by a distance.

The one of the plurality of reflecting mirrors may include a plurality of reflecting regions spaced-apart from each other and disposed on the second optical path to correspond to adjacent ones of the plurality of reflecting mirrors to receive and reflect the light beam, and the ghost image preventing unit may be disposed between the first and second reflecting regions.

The ghost image preventing unit may be disposed on a portion of the one of the plurality of reflecting mirrors to divide a reflecting surface of the one of the plurality of reflecting mirrors into at least two reflecting regions to receive and reflect the light beam from and to corresponding ones of the plurality of reflecting mirrors.

The ghost image preventing unit may be formed of one of a light absorbing material and a light transmitting material to remove the ghost image.

The ghost image preventing unit may be disposed on a portion of the one of the plurality of reflecting mirror to control the light beam from being reflected along the second optical path from the portion of the one of the reflecting mirrors.

The one of the plurality of reflecting mirror may include a reflecting surface, and the ghost image preventing unit may be formed on at least one portion of the reflecting surface to control the light beam from being reflected along the second optical path from the portion of the one of the reflecting mirrors to corresponding ones of the plurality of reflecting mirror..

According to another aspect of the present invention there is provided a scanner module usable with an image scanning apparatus, including a mirror unit disposed on an optical path to receive a light beam, and including a plurality of reflecting mirrors each disposed to reflect the light beam along a second optical path; and a ghost image preventing unit formed on a portion of at least one of the plurality of reflecting mirrors to allow another portion of the at least one of the plurality of reflecting mirrors to reflect the light beam, and to control the portion of the at least one of the plurality of reflecting mirrors from reflecting the light beam to remove a ghost image included in the light beam.

According to another aspect of the present invention there is provided a scanner module usable with an image scanning apparatus, including a mirror unit disposed on an optical path to receive a light beam, and including a first mirror having a first reflecting region to receive the light beam and to reflect the received light beam, a second mirror to receive the reflected light beam from the reflecting region of the first mirror and to reflect the received light beam such that the second region of the second mirror receives the reflected light beam from the second mirror and reflects the received light beam, so that a ghost image is removed from the light according to reflections of the light beam on the first and second reflecting regions of the first mirror, and a real image included in the light beam is transmitted from the mirror unit to an outside of the mirror unit.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:
FIG. 1 is a schematic perspective view which shows an optical arrangement of a scanner module according to an exemplary embodiment of the present general inventive concept;
FIG. 2 is a schematic view which shows the optical arrangement of the scanner module of FIG. 1;
FIG. 3 is a perspective view which shows a reflecting mirror provided on a ghost image preventing unit of the scanner module of FIGS. 1 and 2;.

FIG. 4 is a perspective view which shows a reflecting mirror provided on a ghost image preventing unit according to another exemplary embodiment of the present general inventive concept; and

FIG. 5 is a block diagram which shows an image scanning apparatus according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below so as to explain the present general inventive concept by referring to the figures.

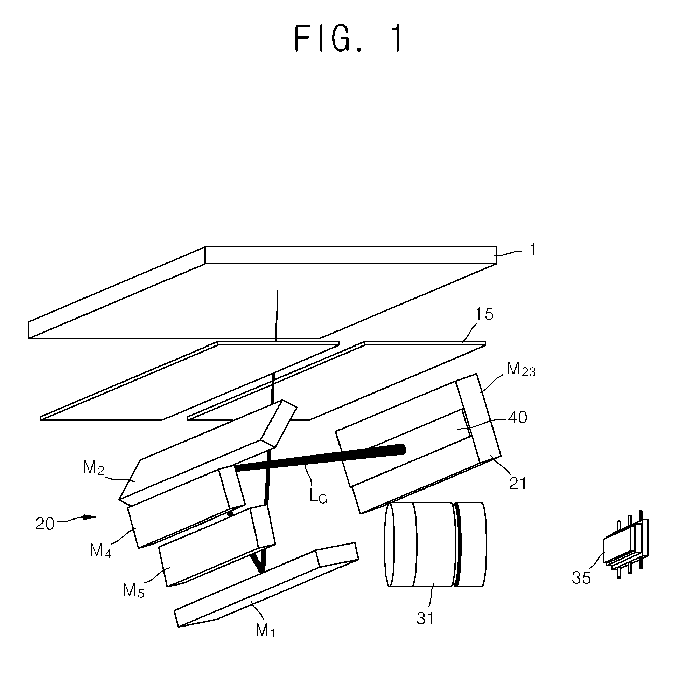

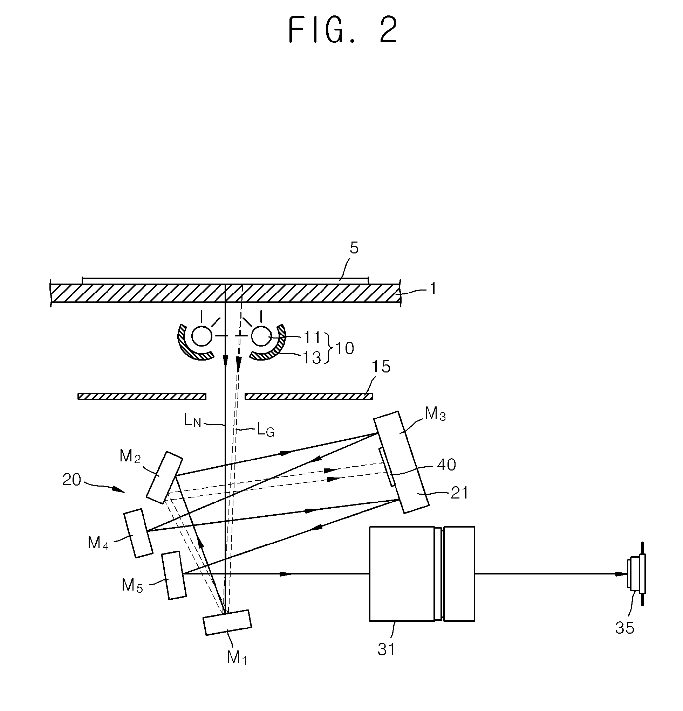

Referring to FIGs.1 and 2, a scanner module according to an exemplary embodiment of the present general inventive concept includes an illumination optical unit 10, a plurality of reflecting mirrors 20, a sensor unit 35, a focusing lens unit 31, and a ghost image preventing unit (or a ghost image controlling unit) 40.

The illumination optical unit 10 illuminates light to an object 5 such as a manuscript, etc., on a cover glass 1. For this, the illumination optical unit 10 may include a light source 11 to generate and irradiate the light, and a reflector 13 to be formed at one part of the light source 11. The reflector 13 reflects the light irradiated from the light source 11 toward the object 5.

The plurality of reflecting mirrors 20 are provided to secure a light path at a predetermined space, and change the light path by reflecting a light beam L_{N} from the object 5. In the case of the plurality of reflecting mirrors 20, it is possible to secure an optical distance for focusing an image between the object 5 and the sensor unit 35 and to compact the scanner module.

In the present exemplary embodiment, the plurality of reflecting mirrors 20 may include at least one multiple reflecting mirror 21. The multiple reflecting mirror 21 reflects one or more real images incident on different reflecting positions at least twice. The multiple reflecting mirror secures a relatively long light path without increasing the number of the reflecting mirrors.

The plurality of reflecting mirrors 20 include first through fifth mirrors M₁ through M₅. Here, the third reflecting mirror M₃ is employed as the multiple reflecting mirror 21 and reflects a light beam L_{N} corresponding to the incident real image twice with respect to corresponding ones of the plurality of reflection mirrors 20. Accordingly, the light beam L_{N} reflected from the object 5 is reflected to the first reflecting mirror M₁, the second reflecting mirror M₂, a first reflecting region M₃ₐ of the third reflecting mirror M₃, the fourth reflecting mirror M₄, a second reflecting region M_{3b} of the third reflecting mirror M₃, and the fifth reflecting mirror M₅ toward a focusing lens unit 31 in order as illustrated in FIGS. 1, 2, and 3.

Herein, as an example of the plurality of reflecting mirrors 20, five reflecting mirrors in FIGS. 1 and 2 are intended to describe certain embodiments only, but the present general inventive concept is not limited thereto. Alternatively, the number of reflecting mirrors may be changed as necessary. Also, the multiple reflecting mirror 21 is not limited to the third reflecting mirror M₃ and the number of reflections is not limited to twice reflections.

The sensor unit 35 may include sensing devices such as a charge coupled device (CCD), etc., and reads information about the object 5 from the incident light beam via the plurality of reflecting mirrors 20. The focusing lens unit 31 is disposed between the sensor unit 35 and the plurality of reflecting mirrors 20, and focuses the light beam reflected from the plurality of reflecting mirrors 20 onto the sensor unit 35.

The ghost image preventing unit 40 is formed on at least one of the reflecting mirror 20 and controls or prevents at least one light beam L_{G} corresponding to the ghost image from directing to the sensor unit 35. It is preferably but not necessarily that the ghost image preventing unit 40 may be provided between the first reflecting region M₃ₐ and the second reflecting region M_{3b} corresponding to the real image reflecting positions of the multiple reflecting mirror 21.

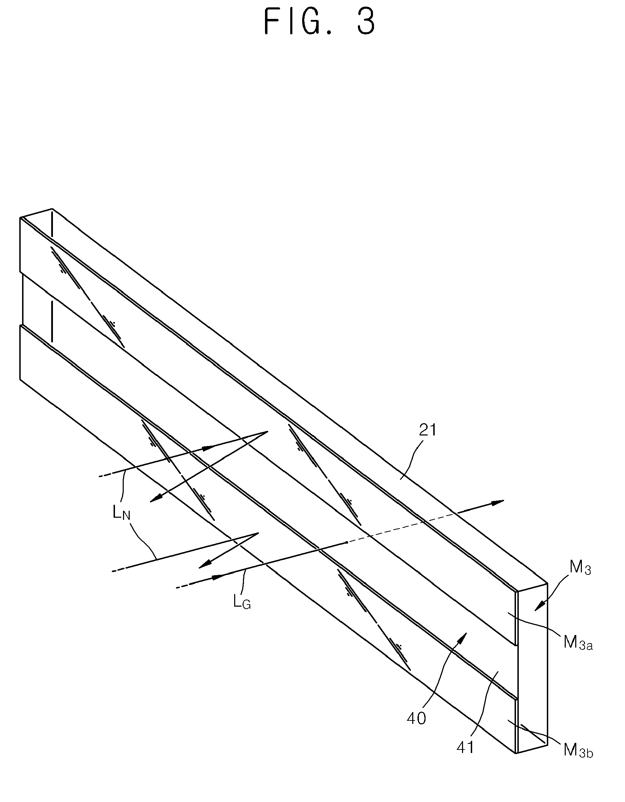

Referring to FIG. 3, the ghost image preventing unit 40 according to one exemplary embodiment of the present general inventive concept may be a transparent part 41 formed at the multiple reflecting mirror 21 to transmit the light beam L_{G} corresponding to the incident ghost image. Accordingly, the light beams L_{N} corresponding to the real images are incident to the first reflecting region M₃ₐ and the second reflecting region M_{3b} respectively, reflected from the corresponding ones of the first reflecting region M3a and the second reflecting region M3b of the multiple reflecting mirror 21, transmitted through the focusing lens unit 31 along the predetermined light path, and focused to the sensor unit 35. On the other hand, the light beam L_{G} corresponding to the ghost image is transmitted to the transparent part 41, and not incident to the sensor unit 35. Thus, the ghost image may be controlled or prevented from being focused on the sensor unit 35.

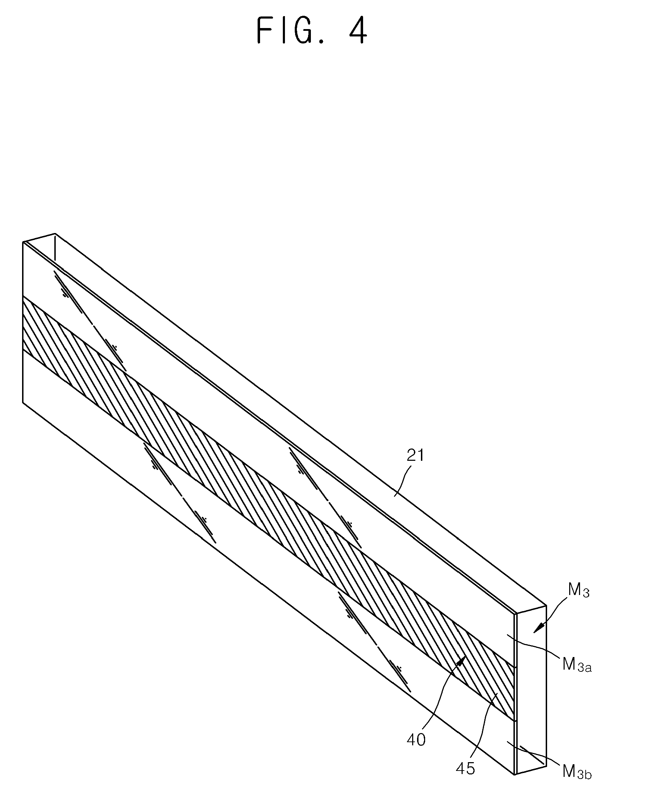

Referring to FIG. 4, the ghost image preventing unit 40 according to another exemplary embodiment of the present general inventive concept may be an absorption part 45 formed at the multiple reflecting mirror 21 so as to absorb the light beam L_{G} corresponding to the incident ghost image. Accordingly, unlike the light beam L_{N} corresponding to the real image, the light beam L_{G} corresponding to the ghost image is absorbed in the absorption part 45, and not incident to the sensor unit 35. Thus, the ghost image is controlled or prevented from being focused onto the sensor unit 35.

Also, the scanner module according to an exemplary embodiment of the present general inventive concept further includes a light window 15 which controls the light beam directing toward the sensor unit 35 as illustrated in FIG. 2. The light window 15 is disposed between the illumination optical unit 10 and the plurality of reflecting mirrors 20, and blocks an unnecessary light beam among the light beams reflected from the object 5. Accordingly, the light beam L_{N} corresponding to the real image and only a part of the light beam L_{G} corresponding to the ghost image reflected from the peripheral light beam L_{N} directs from the object 5 to the reflecting mirrors 20.

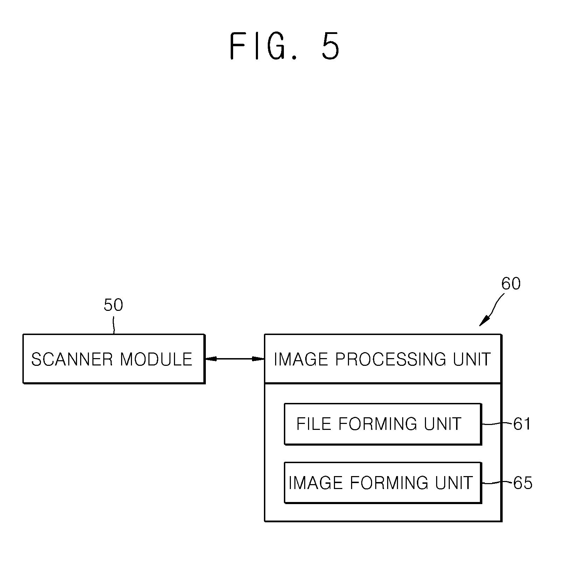

Referring to FIG. 5, the image scanning apparatus according to an exemplary embodiment of the present general inventive concept includes a scanner module 50, an image processing unit 60 to process a real image obtained from the scanner module 50. Here, the image scanning apparatus according to the exemplary embodiment of the present general inventive concept may be a multi function printer (MFP), a digital copier, or a scanner apparatus.

The detailed description of the scanner module 50 will be omitted as it is substantially same with that of the scanner module according to an exemplary embodiment of the present invention described referring to FIGS. 1 through 4.

The image processing unit 50 includes at least one of a file forming unit 61 to form a real image file based on the real image obtained by the sensor unit 35 (referring to FIG. 1) of the scanner module 50, and an image forming unit 65 to form an image based on the obtained real image to a printing medium.

With the foregoing configuration, the image scanning apparatus controls or prevents the ghost image from optically deteriorating an image signal. Thus, an image may be improved in quality while an image is processed.

The scanner module and the image scanning apparatus employing the same according to an exemplary embodiment of the present general inventive concept analyze the light path generating the ghost image and optically cut the light path of the light beam corresponding to the ghost image so as to essentially control or prevent the ghost image from being focused. Also, the problem of the ghost image caused by using the multiple reflecting mirror to compact the whole configuration of the reflecting mirrors can be optically solved.

Although a few exemplary embodiments of the present general inventive concept have been shown and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A scanner module usable with an image scanning apparatus, comprising:
an illumination optical unit (10) which illuminates light to an object;
a plurality of reflecting mirrors (20) which reflect a light beam from the object and change a light path;
a sensor unit (35) which reads information about the object from the incident light beam;
a focusing lens unit (31) which is disposed between the plurality of reflecting mirrors (20) and the sensor unit (35) to focus the light beam reflected from the plurality of reflecting mirrors (20) onto the sensor unit (35); and
a ghost image preventing unit (40) which is formed on at least one of the plurality of reflecting mirrors (20) to control a ghost image from being directed to the sensor unit (35).

2. The scanner module of claim 1, wherein the plurality of reflecting mirrors (20) comprise at least one multiple reflecting mirror (21) having different reflecting positions each disposed to receive and reflect the light beam having a real image.

3. The scanner module of claim 2, wherein the ghost image preventing unit (40) is formed between the real image reflecting positions of the one multiple reflecting mirror (21).

4. The scanner module of claim 3, wherein the ghost image preventing unit (40) comprises a transparent part (41) formed on the multiple reflecting mirror (21) to transmit the ghost image included in the light beam.

5. The scanner module of claim 3, wherein the ghost image preventing unit (40) comprises an absorption part (45) formed on the multiple reflecting mirror to absorb the ghost image included in the light beam.

6. The scanner module as claimed in any one of claims 1 to 5, wherein the illumination optical unit (10) comprises:
a light source (11) which generates and irradiates light; and
a reflector (13) which is formed on one side of the light source (11) and reflects the light irradiated from the light source (11) toward the object.

7. The scanner module as claimed in any one of claims 1 to 5, further comprising a light window (15) which is disposed between the illumination optical unit (10) and the plurality of reflecting mirrors (20) and controls the light beam directing toward the sensor unit (35).

8. An image scanning apparatus comprising:
a scanner module (50) according to as claimed in any one of claims 1 to 5; and
a image processing unit (60) which processes a real image obtained from the scanner module (50).

9. The image scanning apparatus of claim 8, wherein the image processing unit (60) comprises a file forming unit (61) to form a real image file based on the obtained real image, and an image forming unit (65) to form an image based on the obtained real image to a printing medium.

10. The image scanning apparatus of claim 8 or claim 9, wherein the illumination optical unit (10) comprises:
a light source (11) which generates and irradiates light; and
a reflector (13) which is formed one side of the light source (11) and reflects the light irradiated from the light source (11) toward the object.

11. The image scanning apparatus of any one of claims 8 to 10, wherein the scanner module (50) further comprises a light window (15) which is disposed between the illumination optical unit (10) and the plurality of reflecting mirrors (20) and controls the light beam directing toward the sensor unit (35).

12. A scanner module usable with an image scanning apparatus, comprising:
a mirror unit including a plurality of reflecting mirrors (20) each disposed to reflect an incident light beam;
a sensor unit (35) which reads information about an object from the incident light beam; and
a ghost image preventing unit (40) formed on at least one of the plurality of reflecting mirrors (20) to control a ghost image from being directed to the sensor unit (35) and to obtain a real image from the light beam.

13. The scanner module of claim 12, wherein one of the plurality of reflecting mirrors (20) comprises first and second reflecting regions which are spaced-apart from each other by a distance; and the ghost image preventing unit (40) is disposed between the first reflecting region and the second reflecting region.

14. The scanner module of claim 12 or claim 13, wherein the ghost image preventing unit (40) is disposed on a portion of the one of the plurality of reflecting mirrors (20) to divide a reflecting surface of the one of the plurality of reflecting mirrors (20) into at least two reflecting regions to receive and reflect the light beam from and to corresponding ones of the plurality of reflecting mirrors (20).

15. The scanner module as claimed in any one of claims 12 to 14, wherein the ghost image preventing unit (40) is formed of one of a light absorbing material and a light transmitting material to remove the ghost image.
